# EUROPÄISCHE PATENTSCHRIFT

(11) **EP 2 277 332 B1**
(45) Veröffentlichungstag und Bekanntmachung des Hinweises auf die Patenterteilung: **04.03.2015**
(21) Anmeldenummer: 09745559.6
(22) Anmeldetag: 13.05.2009
(51) Int. Cl.: H04W 4/04, H04L 29/08

(54) **Anordnung eines Verkehrsmittels zur drahtlosen Informationsübermittlung**
Arrangement for a means of transport for wirelessly transmitting information
Système de transmission d'informations sans fil associé à un moyen de transport

(30) Priorität: 13.05.2008 DE 102008023249
(43) Veröffentlichungstag der Anmeldung: 26.01.2011
(73) Patentinhaber: Lufthansa Technik AG, 22335 Hamburg (DE)
(72) Erfinder: MUIRHEAD, Andrew, 22848 Norderstedt (DE)
(74) Vertreter: Glawe, Delfs, Moll
(86) Internationale Anmeldenummer: PCT/EP2009/003410
(87) Internationale Veröffentlichungsnummer: WO 2009/138225

(56) Entgegenhaltungen:
- WO-A1-03/021909
- WO-A1-2005/107309
- US-A1- 2005 136 917
- US-A1- 2007 072 590
- US-B1- 7 343 157
- WIKIPEDIA: "Push technology", INTERNET CITATION, 10 May 2008 (2008-05-10), pages 1-2, XP007920297, Retrieved from the Internet: URL:http://web.archive.org/web/20080510090 355/http://en.wikipedia.org/wik i/Push_technology [retrieved on 2012-02-20]

## Beschreibung

Die Erfindung betrifft eine Anordnung zur drahtlosen Übermittlung von Informationen an ein Mobilgerät eines Benutzers eines Verkehrsmittels.

Benutzern von Verkehrsmitteln wie beispielsweise Flugzeugen und Eisenbahnen werden vor Antritt einer Reise, während der Reise und nach Abschluss der Reise auf verschiedene Weise reiserelevante Informationen durch den Betreiber des Verkehrsmittels übermittelt. Solche Informationen werden in der Regel durch Ansagen, auf bordeigenen Bildschirmen des Verkehrsmittels oder dergleichen übermittelt.

WO 03/021909 A1 offenbart ein Inflight-Portal, von dem ein Passagier eines Flugzeugs Informationen abrufen kann. US 2007/072590 A1 beschreibt die automatische Identifizierung eines Passagiers eines Flugzeugs anhand seines Mobiltelefons zum Zwecke der Vornahme von Flug- oder Hotelreservierungen oder Abrechnung von Roaming-Gebühren.

Der Erfindung liegt die Aufgabe zugrunde, eine Anordnung der eingangs genannten Art zu schaffen, die eine für den Benutzer des Verkehrsmittels bequeme und einfache Übermittlung derartiger relevanter Informationen gestattet. Die Erfindung löst diese Aufgabe bei einer eingangs genannten Anordnung durch folgende Merkmale:
- eine dem Verkehrsmittel zugeordnete erste Datenbank, die reiserelevante Informationen enthält;
eine zweite Datenbank, die ein Profil des Benutzers-enthält;
- eine Einrichtung zum Identifizieren des Mobilgerätes des Benutzers, wenn dieses Mobilgerät in die Reichweite eines lokalen drahtlosen Netzwerks des Verkehrsmittels gelangt;
- eine Einrichtung zur Auswahl von Informationen aus der ersten Datenbank anhand des in der zweiten Datenbank gespeicherten Profils;
- eine Einrichtung zur aktiven Übermittlung der ausgewählten Informationen an das Mobilgerät des Benutzers;
- wobei die Anordnung dazu ausgebildet ist, die ausgewählten Informationen an das Mobilgerät übertragen zu können, sobald das Mobilgerät des Benutzers im lokalen drahtlosen Netzwork eingeloggt und identifiziert ist.

Zunächst seien einige im Rahmen der Erfindung verwendete Begriffe erläutert. Der Begriff Verkehrsmittel umfasst jegliche Verkehrsmittel, insbesondere öffentliche Verkehrsmittel wie insbesondere Flugzeuge und Eisenbahnen. Diesem Verkehrsmittel ist eine erste Datenbank zugeordnet. Zugeordnet bedeutet in diesem Zusammenhang, dass die Datenbank vorzugsweise in einem Rechner an Bord des Verkehrsmittels gespeichert ist. Alternativ kann die Datenbank in einem Rechner außerhalb des Verkehrsmittels gespeichert sein, wobei dann während des Betriebs des Verkehrsmittels eine Verbindung zu dieser Datenbank hergestellt werden kann. Diese dem Verkehrsmittel zugeordnete erste Datenbank enthält reiserelevante Informationen. Es handelt sich dabei um Informationen, die im Kontext der von dem Verkehrsmittel durchgeführten Reise für einen Benutzer von Interesse sind oder sein könnten. Der Begriff wird weiter unten noch näher erläutert.

Die erfindungsgemäße Anordnung weist ferner eine zweite Datenbank auf, die ein Profil des Benutzers enthält. Der Benutzer muss somit bei dem Betreiber des Verkehrsmittels registriert sein. Bestimmte Nutzungsgewohnheiten oder sonstige Daten wie beispielsweise Sitzplatzpräferenzen, bevorzugte Mahlzeiten oder dergleichen bilden ein Profil des Benutzers.

Die Anordnung weist eine Einrichtung zum Identifizieren eines Mobilgerätes des Benutzers auf, wenn dieses Mobilgerät in die Reichweite eines lokalen drahtlosen Netzwerks des Verkehrsmittels gelangt. Der Begriff Mobilgerät bezeichnet hier jeglichen sogenannten PDA (Personal Digital Assistent), der zur drahtlosen Kommunikation geeignet ist wie beispielsweise Mobiltelefone, tragbare Computer aller Art oder dergleichen. Das Verkehrsmittel weist ein lokales drahtloses Netzwerk auf. Der Begriff bezeichnet jegliche drahtlosen Kommunikationsnetzwerke wie beispielsweise Mobilfunknetze, Wireless LANs, Bluetooth-Netzwerke oder dergleichen. Lokal bedeutet in diesem Zusammenhang, dass das Netzwerk durch eine Einrichtung an Bord des Verkehrsmittels betrieben wird, beispielsweise einen entsprechenden W-LAN Router, eine Einrichtung zum Erstellen einer GSM-Pikozelle oder dergleichen.

Es ist eine Einrichtung zur Auswahl von Informationen aus der ersten Datenbank anhand des in der zweiten Datenbank gespeicherten Profils vorgesehen. In dem Profil ist somit gespeichert, ob und welche Informationen der Benutzer aus der ersten Datenbank abrufen und auf sein Mobilgerät übermittelt haben möchte. Das Profil kann beispielsweise die Information enthalten, dass der Benutzer bei einer Reise mit einem Verkehrsmittel des Betreibers regelmäßig über Einreise und Zollbestimmungen am Zielort informiert werden möchte. Die genannte Auswahleinrichtung wählt dann die entsprechenden Informationen zu einem geeigneten Zeitpunkt aus der ersten Datenbank aus und übermittelt sie mittels des drahtlosen Netzwerks an das identifizierte Mobilgerät des Benutzers. Die zweite Datenbank wird in der Regel auf einem stationären Rechner des Betreibers des Verkehrsmittels gespeichert sein. Die Verknüpfung der beiden Datenbanken zwecks Durchführung der genannten Auswahl kann auf unterschiedliche Arten erfolgen. Ist beispielsweise die erste Datenbank in einem Rechner des Verkehrsmittels gespeichert, kann die Auswahleinrichtung unmittelbar eine Verbindung dieser beiden Datenbanken vornehmen, wenn während des Betriebs des Verkehrsmittels ständig oder jedenfalls zu geeigneten Zeitpunkten eine Verbindung zwischen den Rechnern des Verkehrsmittels und dem stationärem Rechner des Betreibers hergestellt werden kann, beispielsweise über ein Mobilfunknetz, eine Satellitenverbindung oder eine andere geeignete drahtlose Verbindung. Alternativ kann vorgesehen sein, dass vor Antritt der Reise ein Profil des Benutzers auf einen Rechner an Bord des Verkehrsmittels überspielt wird, so dass es im Betrieb des Verkehrsmittels unabhängig davon zur Verfügung steht, ob eine Verbindung mit einem stationärem Rechner besteht. Die Auswahl der Profile kann beispielsweise erfolgen vor Antritt der Reise anhand der vorgenommenen Buchungen, alternativ kann eine Auswahl in dem Moment erfolgen, in dem der Benutzer das Verkehrsmittel betritt und sein Mobilgerät im lokalen Netzwerk des Verkehrsmittels identifiziert wird. Zu diesem Zeitpunkt befindet sich beispielsweise ein Flugzeug noch am Gate, so dass das Profil des soeben identifizierten Benutzers mittels der lokal am Gate bestehenden Datenverbindungen abgerufen und auf einen Rechner des Flugzeugs überspielt werden kann.

Erfindungsgemäß werden die ausgewählten Informationen an das Mobilgerät des Benutzers übermittelt. Es handelt es sich dabei um eine sogenannte Push-Übermittlung, die aktiv von einem Rechner an Bord des Verkehrsmittels initiiert wird. Die gepushten Informationen werden vorzugsweise in einem lokalen Speicher des Mobilgerätes gespeichert und somit lokal für den Benutzer bereitgehalten. Dies hat den Vorteil, dass er entsprechende Informationen (wie beispielsweise Zoll- oder Einreiseformalitäten) bei Bedarf auch nach Verlassen des Verkehrsmittels aus diesem lokalen Speicher wieder abrufen kann. Die Informationsübermittlung kann mittels bekannter Protokolle wie beispielsweise E-mail, SMS, über das Internetprotokoll oder dergleichen erfolgen.

Die Informationen in der ersten Datenbank können beispielsweise Flug-, Reise- oder Umsteigeinformationen (Gate des Anschlussfluges oder dergleichen), Einreise- und Zollformalitäten des Zielortes, Wetterinformationen, Verkehrs- und Verkehrsmittelinformation für den Zielort, touristische Information, Hotel- und/oder Restaurantinformationen umfassen.

Im Rahmen der Erfindung ist es bevorzugt, das der Benutzer sein Profil in der zweiten Datenbank anlegen und/oder verändern kann. In das Profil können zum einen Informationen einfließen, die der Benutzer dem Betreiber des Verkehrsmittels beispielsweise im Rahmen der Buchung übermittelt. Andererseits ist es bevorzugt vorgesehen, dass der Benutzer sein Profil einsehen und vorzugsweise auch ändern kann. Dies kann beispielsweise über das Internet erfolgen, so dass der Benutzer sein Profil jederzeit ändern kann. Alternativ oder zusätzlich ist es möglich, dass der Benutzer sein Profil während des Aufenthaltes an Bord des Verkehrsmittels einsehen und ändern kann, beispielsweise wiederum über das Internet, das lokale Funknetzwerk des Verkehrsmittels und sein Mobilgerät oder aber über ein proprietäres Zugangssystem an Bord des Verkehrsmittels.

Gemäß einer weiteren Ausgestaltung der erfindungsgemäßen Anordnung ist es möglich, dass sie zusätzlich eine Einrichtung zur Übermittlung von Profilinformationen aus der zweiten Datenbank an Servicesysteme und/oder das Servicepersonal des Verkehrsmittels umfasst. Beispielsweise können bestimmte Essenswünsche des Benutzers aus der zweiten Datenbank automatisch an das Servicepersonal übermittelt werden. Die bevorzugte Sitzumgebung des Passagiers (beispielsweise Sitzeinstellung im Reiseflug, bevorzugte Video- und/oder Audiounterhaltungsprogramme) können dem Profil entnommen und in entsprechenden Systemen des Verkehrsmittels gespeichert werden, so dass sie für den Benutzer an seinem Sitz sofort abrufbar sind.

Eine Ausführungsform der Erfindung wird im folgenden anhand der Schemazeichnung erläutert.

In dem erfindungsgemäßen Beispiel ist das Verkehrsmittel ein Flugzeug. Die Fluggesellschaft besitzt stationär (am Boden) eine zweite Datenbank 1, in der Profile von Benutzern (Passagieren) gespeichert sind. Diese Benutzerprofile werden anhand von Buchungsdaten erstellt, bzw. aktualisiert, alternativ oder zusätzlich kann der Benutzer selbst sein Profil über eine bei 2 angedeutete Website über das Internet einsehen und ändern. Die zweite Datenbank 1 ist mit dem Internet verbunden.

An Bord des Flugzeugs befindet sich eine Flugzeugdatenbank (erste Datenbank) 3, in der reisespezifische Informationen der vorstehend näher beschriebenen Art gespeichert sind. Diese reisespezifischen Informationen können, soweit das Flugzeug eine ständige Datenverbindung zum Boden besitzt, laufend auch während der Reise aktualisiert werden, beispielsweise wetterinformation für den Zielort. Alternativ oder zusätzlich können die Reiseinformationen vor dem Abflug über eine am Gate zur Verfügung stehende Datenverbindung (kabelgebunden oder drahtlos) in die Flugzeugdatenbank 3 eingelesen werden oder mittels eines Datenträgers (beispielsweise eines USB-Sticks, einer DVD oder dergleichen) an Bord gebracht werden.

Die Flugzeugdatenbank 3 kann auch benutzerspezifische Informationen oder Daten enthalten, die anhand des Benutzerprofils eines gebuchten Passagiers erstellt bzw. ausgewählt wurden. Enthält das Benutzerprofil beispielsweise bestimmte Unterhaltungs- oder Filmwünsche, kann die Flugzeugdatenbank 3 vor Beginn des Fluges oder ggf. während des Fluges mit den entsprechenden Daten, beispielsweise den Video- und Audiodaten des gewünschten Films, versehen werden.

Über eine bei 4 angedeutete Verbindung erfolgt vor Beginn des Fluges ein sogenanntes Profilupdate von der zweiten Datenbank zu der ersten Datenbank (Flugzeugdatenbank). Mittels dieses Profilupdates werden lokal in der Flugzeugdatenbank Informationen darüber gespeichert, ob und welche Reiseinformationen aus der Flugzeugdatenbank der jeweilige Benutzer zu welchem Zeitpunkt zur Verfügung gestellt haben möchte. Ein solches Profilupdate kann bereits erfolgen anhand der Buchungsdaten und unabhängig davon, ob der jeweilige Passagier das Flugzeug bereits betreten hat. Dieses Profilupdate anhand der Buchungsdaten erlaubt beispielsweise ein frühzeitiges Update auch mit großen Datenmengen, wenn der Passagier beispielsweise einen bestimmten Filmwunsch in seinem Profil gespeichert hat. Alternativ oder zusätzlich kann ein (ggf. weitergehendes) Profilupdate dann erfolgen, wenn der Passagier das Flugzeug tatsächlich betritt und sein bei 5 angedeutetes Mobilgerät im lokalen Flugzeugnetzwerk 6 mittels der bei 7 angedeuteten drahtlosen Verbindung tatsächlich identifiziert wird. Ein Profilupdate erst dann, wenn der Passagier tatsächlich das Flugzeug betritt, hat den Vorteil, dass es kurzfristigen Umbuchungen, No Shows oder dergleichen Rechnung trägt. Nachteilig ist, dass bei einem Einsteigen des Passagiers kurz vor Abflug möglicherweise nicht mehr hinreichend Zeit für ein umfangreiches Update (beispielsweise Übertragung von Videodaten eines Films) zur Verfügung steht oder der Passagier das Flugzeug mit abgeschaltetem Mobilgerät betritt, so dass er nicht identifiziert werden kann. Eine Kombination dieser Updatemöglichkeiten ist daher denkbar. Beispielsweise kann ein Profilupdate zunächst anhand der Buchungsdaten erfolgen, zusätzlich kann eine weitere Aktualisierung erfolgen, sobald der Passagier das Flugzeug mit eingeschaltetem Mobilgerät tatsächlich betritt. Ggf. kann ein weiterer Aktualisierungsvorgang auch durch den Boarding-Vorgang ausgelöst werden, da hierbei der Passagier anhand seiner Bordkarte identifiziert wird und dadurch ein Profilupdate ausgelöst werden kann.

Sobald das Mobilgerät 5 in das Flugzeugnetzwerk 6 eingeloggt und dort identifiziert ist, können Informationen aus der Flugzeugdatenbank 3 an das Mobilgerät 5 übertragen werden. Vorzugsweise geschieht dies durch das bereits geschilderte Push-Verfahren, alternativ ist auch eine interaktive Informationsübermittlung beispielsweise durch das Internetprotokoll möglich. Die entsprechenden Informationen werden vorzugsweise im lokalen Speicher des Mobilgerätes 5 gespeichert, so dass sie dem Passagier jederzeit (auch nach Verlassen des Flugzeuges) noch zur Verfügung stehen.

Weitere Interaktionen zwischen Mobilgerät 5 und Einrichtungen des Flugzeugs über das Flugzeugnetzwerk 6 sind möglich. Beispielsweise kann der Passagier über sein Mobilgerät 5 bei Bedarf Servicewünsche an das Kabinenpersonal übermitteln oder (sofern während der Reise eine Internetverbindung zum Boden besteht) beispielsweise über einen bei 8 angedeuteten Direktzugriff sein Benutzerprofil in der zweiten Datenbank 1 anschauen und ggf. ändern.

Zusätzlich können interaktive Möglichkeiten vorgesehen sein, die beispielsweise eine Währungsumrechnung anhand von in der Flugzeugdatenbank 3 gespeicherten Wechselkursen ermöglichen oder die Buchung von Transport und Unterkunft am Reiseziel oder dergleichen. Bei diesen Interaktionen wird über das Mobilgerät 5 eine Kommunikation mit der Flugzeugdatenbank 3 oder aber über den Direktzugriff 8 und eine Internetverbindung mit dem Boden eine Kommunikation mit Rechnern der Fluggesellschaft oder externer Dienstleister (beispielsweise Hotel- oder Mietwagenunternehmen) ermöglicht.

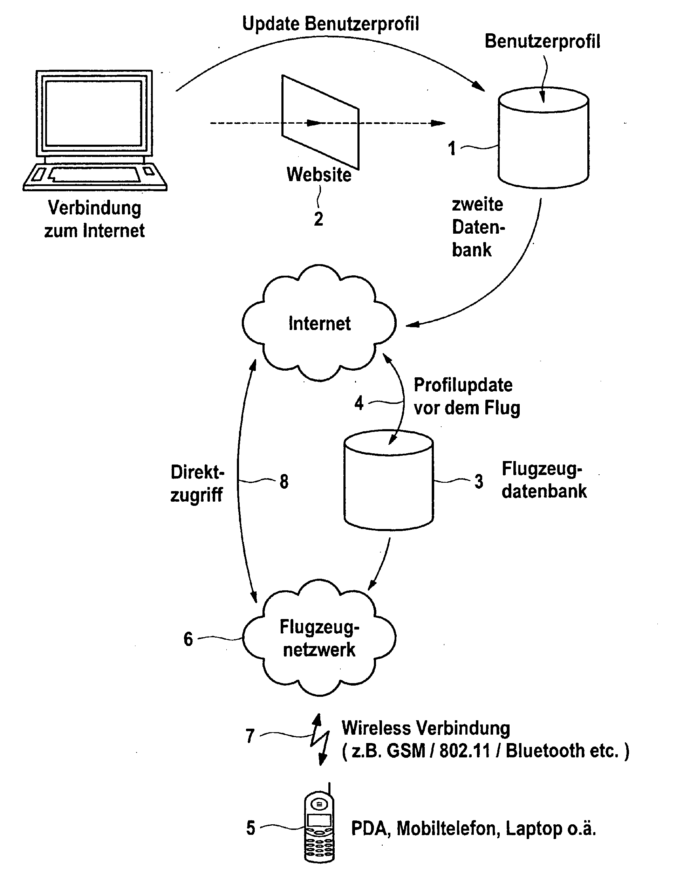

## Patentansprüche

1. Anordnung zur drahtlosen Übermittlung von Informationen an ein Mobilgerät (5) eines Benutzers eines Verkehrsmittels, **gekennzeichnet durch** folgende Merkmale:
a) eine dem Verkehrsmittel zugeordnete erste Datenbank (3), die reiserelevante Informationen enthält;
b) eine zweite Datenbank (1), die ein Profil des Benutzers enthält;
c) eine Einrichtung zum Identifizieren des Mobilgerätes des Benutzers, wenn dieses Mobilgerät in die Reichweite eines lokalen drahtlosen Netzwerks (6) des Verkehrsmittels gelangt;
d) eine Einrichtung zur Auswahl von Informationen aus der ersten Datenbank (3) anhand des in der zweiten Datenbank (1) gespeicherten Profils;
e) eine Einrichtung zur aktiven Übermittlung (Pushen) der ausgewählten Informationen an das Mobilgerät (5) des Benutzers;
wobei die Anordnung dazu ausgebildet ist, die ausgewählten Informationen an das Mobilgerät (5) übertragen zu können, sobald das Mobilgerät (5) des Benutzers im lokalen drahtlosen Netzwerk (6) des Verkehrsmittels eingeloggt und dort identifiziert ist.

2. Anordnung nach Anspruch 1, **dadurch gekennzeichnet, dass** die erste Datenbank (3) in einem an Bord des Verkehrsmittels angeordneten Computer gespeichert ist.

3. Anordnung nach Anspruch 1 oder 2, **dadurch gekennzeichnet, dass** die erste Datenbank (3) Informationen umfasst ausgewählt aus der Gruppe bestehend aus Flug- und/oder Reiseinformationen, Umsteigeinformationen, Einreise- und Zollformalitäten des Zielortes, Wetterinformationen, Verkehrs- und Verkehrsmittelinformationen für den Zielort, touristische Informationen, Hotel- und/oder Restaurantinformationen.

4. Anordnung nach einem der Ansprüche 1 bis 3, **dadurch gekennzeichnet, dass** die zweite Datenbank (1) in einem Computer des Betreibers des Verkehrsmittels gespeichert ist.

5. Anordnung nach einem der Ansprüche 1 bis 4, **dadurch gekennzeichnet, dass** der Benutzer sein Profil in der zweiten Datenbank (1) anlegen und/oder verändern kann.

6. Anordnung nach Anspruch 5, **dadurch gekennzeichnet, dass** das Profil für den Benutzer über das Internet und/oder an Bord des Verkehrsmittels über sein Mobilgerät (5) zugänglich ist.

7. Anordnung nach einem der Ansprüche 1 bis 6, **dadurch gekennzeichnet, dass** das lokale drahtlose Netzwerk (6) des Verkehrsmittels ausgewählt ist aus der Gruppe bestehend aus einer Mobilfunkzelle, einem W-LAN und einem Bluetooth-Netzwerk.

8. Anordnung nach einem der Ansprüche 1 bis 7, **dadurch gekennzeichnet, dass** sie zum Abrufen von Profilinformationen aus der zweiten Datenbank (1) und Speicherung einer Kopie dieser Profilinformationen in einem Computer des Verkehrsmittels ausgebildet ist, sobald das Mobilgeräts (5) des Benutzers identifiziert ist.

9. Anordnung nach einem der Ansprüche 1 bis 8, **dadurch gekennzeichnet, dass** die Übermittlung der ausgewählten Informationen an das Mobilgerät (5) des Benutzers mittels E-Mail, SMS, oder mittels des Internet-Protokolls erfolgt.

10. Anordnung nach einem der Ansprüche 1 bis 9, **dadurch gekennzeichnet, dass** sie zusätzlich eine Einrichtung zur Übermittlung von Profilinformationen aus der zweiten Datenbank (1) an Servicesysteme und/oder das Servicepersonal des Verkehrsmittels umfasst.

## Claims

1. Arrangement for the wireless transmission of information to a mobile appliance (5) of a user of a means of transport, **characterised by** the following features:
a) a first database (3) which is associated with the means of transport and which contains travel-related information;
b) a second database (1) which contains a profile of the user;
c) a device for identifying the mobile appliance of the user when said mobile appliance comes into range of a local wireless network (6) of the means of transport;
d) a device for selecting information from the first database (3) using the profile stored in the second database (1);
e) a device for actively transmitting (pushing) the selected information to the mobile appliance (5) of the user;
the arrangement being designed to be able to transmit the selected information to the mobile appliance (5) as soon as the mobile appliance (5) of the user logs into the local wireless network (6) of the means of transport and is identified therein.

2. Arrangement according to Claim 1, **characterised in that** the first database (3) is stored in a computer arranged on board the means of transport.

3. Arrangement according to Claim 1 or 2, **characterised in that** the first database (3) comprises information selected from the group comprising flight and/or travel information, transfer information, entry and customs formalities of the destination, weather information, traffic and means of transport information for the destination, tourist information, hotel and/or restaurant information.

4. Arrangement according to one of Claims 1 to 3, **characterised in that** the second database (1) is stored in a computer of the operator of the means of transport.

5. Arrangement according to one of Claims 1 to 4, **characterised in that** the user can create and/or alter his or her profile in the second database (1).

6. Arrangement according to Claim 5, **characterised in that** the profile is accessible to the user via the Internet and/or on board the means of transport using his or her mobile appliance (5).

7. Arrangement according to one of Claims 1 to 6, **characterised in that** the local wireless network (6) of the means of transport is selected from the group comprising a mobile radio cell, a W-LAN and a Bluetooth network.

8. Arrangement according to one of Claims 1 to 7, **characterised in that** it is designed to retrieve profile information from the second database (1) and to store a copy of said profile information in a computer of the means of transport as soon as the mobile appliance (5) of the user has been identified.

9. Arrangement according to one of Claims 1 to 8, **characterised in that** the selected information is transmitted to the mobile appliance (5) of the user by means of e-mail, SMS, or by means of the Internet protocol.

10. Arrangement according to one of Claims 1 to 9, **characterised in that** it additionally comprises a device for transmitting profile information from the second database (1) to service systems and/or the service personnel of the means of transport.

## Revendications

1. Dispositif de transmission sans fil d'informations à un appareil mobile (5) d'un utilisateur d'un moyen de transport, **caractérisé par** les caractéristiques suivantes :
a) une première base de données (3) attribuée au moyen de transport, qui contient des informations relatives à des trajets ;
b) une deuxième base de données (1), qui contient un profil de l'utilisateur ;
c) un dispositif d'identification de l'appareil mobile de l'utilisateur, lorsque cet appareil mobile arrive à portée d'un réseau sans fil local (6) du moyen de transport ;
d) un dispositif de sélection d'informations à partir de la première base de données (3) à l'aide du profil enregistré dans la deuxième base de données (1) ;
e) un dispositif de transmission active (push) des informations sélectionnées à l'appareil mobile (5) de l'utilisateur ;
le dispositif étant conçu afin de pouvoir transmettre les informations sélectionnées à l'appareil mobile (5) dès que l'appareil mobile (5) de l'utilisateur est connecté au réseau sans fil local (6) du moyen de transport et y est identifié.

2. Dispositif selon la revendication 1, **caractérisé en ce que** la première base de données (3) est enregistrées dans un ordinateur se trouvant à bord du moyen de transport.

3. Dispositif selon la revendication 1 ou 2, **caractérisé en ce que** la première base de données (3) contient des informations sélectionnées dans le groupe constitué d'informations relatives à des vols et/ou des trajets, des informations relatives à des correspondances, des formalités d'entrée sur le territoire et de douanes concernant la destination, des informations météorologiques, des informations relatives au trafic et aux moyens de transport concernant le lieu de destination, des informations touristiques, des informations relatives aux hôtels et/ou aux restaurants.

4. Dispositif selon l'une des revendications 1 à 3, **caractérisé en ce que** la deuxième base de données (1) est enregistrée dans un ordinateur de l'exploitant du moyen de transport.

5. Dispositif selon l'une des revendications 1 à 4, **caractérisé en ce que** l'utilisateur peut créer et/ou modifier son profil dans la deuxième base de données (1).

6. Dispositif selon la revendication 5, **caractérisé en ce que** le profil est accessible à l'utilisateur par Internet et/ou à bord du moyen de transport par l'intermédiaire de son appareil mobile (5).

7. Dispositif selon l'une des revendications 1 à 6, **caractérisé en ce que** le réseau sans fil local (6) du moyen de transport est sélectionné dans le groupe constitué d'une cellule de téléphone mobile, d'un réseau WLN et d'un réseau Bluetooth.

8. Dispositif selon l'une des revendications 1 à 7, **caractérisé en ce qu'**il est conçu pour effectue un appel d'informations de profil dans la deuxième base de données (1) et un enregistrement d'une copie de ces informations de profil dans un ordinateur du moyen de transport dès que l'appareil mobile (5) de l'utilisateur est identifié.

9. Dispositif selon l'une des revendications 1 à 8, **caractérisé en ce que** la transmission des informations sélectionnées à l'appareil mobile (5) de l'utilisateur a lieu par e-mail, SMS ou à l'aide du protocole Internet.

10. Dispositif selon l'une des revendications 1 à 9, **caractérisé en ce qu'**il comprend en outre un dispositif de transmission d'informations de profil provenant de la deuxième base de données (1) à des systèmes de services et/ou au personnel de service du moyen de transport.
